# EUROPÄISCHE PATENTSCHRIFT

(11) **EP 2 054 592 B1**
(45) Veröffentlichungstag und Bekanntmachung des Hinweises auf die Patenterteilung: **01.03.2017**
(21) Anmeldenummer: 07786591.3
(22) Anmeldetag: 07.08.2007
(51) Int. Cl.: F01P 5/12, F04D 29/58, H02K 9/19

(54) **MOTORKREISELPUMPE MIT KÜHLMITTELPUMPE**
MOTOR CENTRIFUGAL PUMP HAVING COOLANT PUMP
POMPE CENTRIFUGE À MOTEUR AVEC POMPE DE RÉFRIGÉRANT

(30) Priorität: 26.08.2006 DE 102006040048
(43) Veröffentlichungstag der Anmeldung: 06.05.2009
(73) Patentinhaber: WILO SE, 44263 Dortmund (DE)
(72) Erfinder: WENDEL, Rolf, 95111 Rehau (DE); WÄCHTER, Dieter, 95707 Thiersheim (DE); ZEISS, Andreas, 95182 Tauperlitz (DE); HUSTER, Bernd, 95213 Münchberg (DE)
(74) Vertreter: Cohausz Hannig Borkowski Wißgott
(86) Internationale Anmeldenummer: PCT/EP2007/006951
(87) Internationale Veröffentlichungsnummer: WO 2008/025437

(56) Entgegenhaltungen:
- WO-A-92/14062
- DE-A1- 10 317 492
- DE-C- 426 945
- GB-A- 2 042 084
- JP-A- 2002 115 548
- US-A- 3 014 639
- US-A- 5 839 397

## Beschreibung

Die Erfindung betrifft eine Motorkreiselpumpe insbesondere als Tauchpumpe mit einer vom Elektromotor angetriebenen Kühlmittelpumpe, die das Kühlmittel des Elektromotors umwälzt und deren Laufrad vom Elektromotor angetrieben ist. Eine solche Pumpe ist aus der DE 10317492 bekannt.
Große Elektromotoren benötigen zum Ableiten der Verlustwärme Kühleinrichtungen. Als Kühlmedium werden sowohl Gase als auch flüssige Medien verwendet. Da in der Regel eine Konvektion zur Abfuhr der Verlustleistung nicht ausreicht, werden zunächst Ventilatoren oder Pumpen für die Strömungserzeugung eingesetzt.

Aufgabe der Erfindung ist es, den Antrieb des Kühlkreislaufes eines
Elektromotors so zu verbessern, dass bei einfacher Herstellung eine konstruktive Einheit besteht, die eine leichte Montage ermöglicht, und eine bedarfsgerechte Anpassung der Kühlleistung schafft.

Diese Aufgabe wird erfindungsgemäß dadurch gelöst, dass die Laufradwelle der Kühlmittelpumpe über ein Getriebe an die Motorwelle angeschlossen ist.

Eine solche Kühlmittelpumpe ist besonders leicht in radialer Richtung zur Motorenwelle ein- und ausbaubar und erfordert wenig Platz. Sie wird insbesondere in radialer Richtung in den Motor eingeschoben. Hierbei ist besonders vorteilhaft, wenn zwischen dem Motorgehäuse und dem Gehäuse der Kreiselpumpe oder einer weiteren Gehäusezwischenschicht eine Gehäusezwischenschicht angeordnet ist, in der die Kühlmittelpumpe gelagert ist. Hierdurch ist eine hohe Flexibilität und Typenvielfalt möglich. Besonders vorteilhaft ist dabei, wenn die Kühlmittelpumpe in einem Raum der Gehäusezwischenschicht formschlüssig einliegt.

Weitere vorteilhafte Ausgestaltungen der Erfindung sind in den Unteransprüchen aufgeführt.

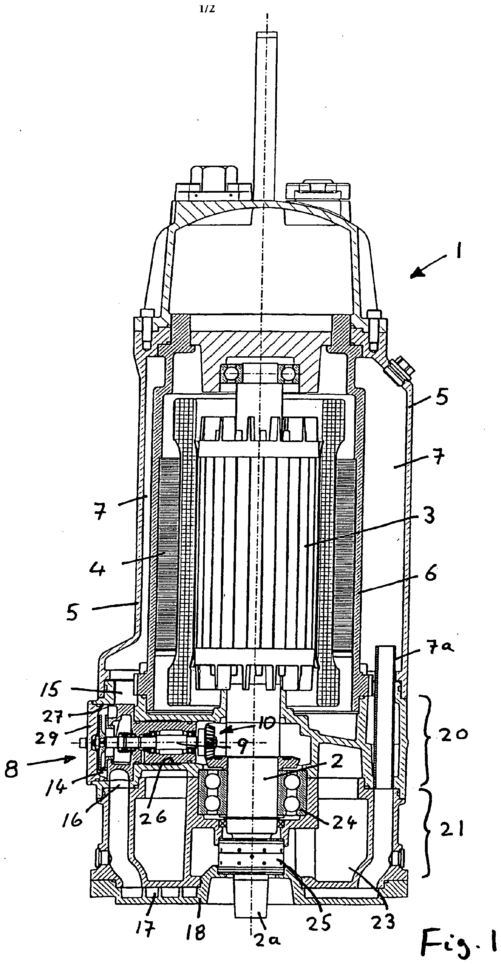

Ein Ausführungsbeispiel der Erfindung ist in den Zeichnungen dargestellt und wird im Folgenden näher beschrieben. Es zeigen
- Fig. 1: einen axialen Schnitt durch den Elektromotor einer Motorkreiseltauchpumpe und

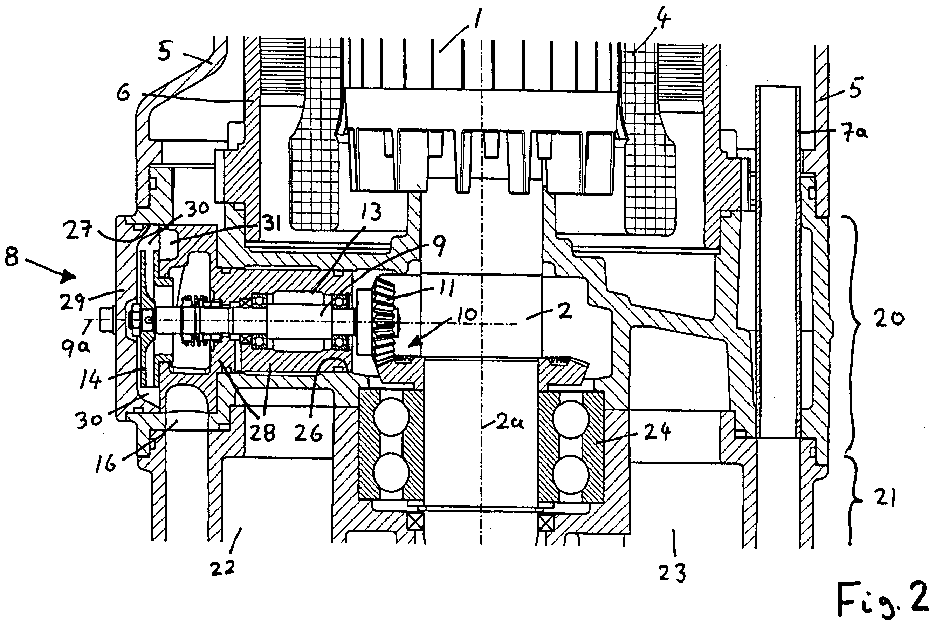

- Fig. 2: einen Ausschnitt aus Fig. 1.

Der Elektromotor 1 einer Motorkreiselpumpe weist eine Motorwelle 2 auf, auf der ein Rotor 3 sitzt, der von einer Statorwicklung 4 umgeben ist. An einem insbesondere unteren Ende der Motorwelle 2 ist die Welle einer nicht dargestellten Kreiselpumpe, mit ihrem Läufer koaxial angeschlossen, wobei das Pumpengehäuse am Teil 18 des Motorengehäuses befestigt ist. Die Motorpumpe wird vorzugsweise in senkrechter Stellung (senkrechter Motoren- und Pumpenwelle) als Tauchpumpe benutzt.

Das Motorengehäuse 6 ist von einem äußeren Gehäuse 5 koaxial umgeben, das mit dem Motorengehäuse einen teilzylindrischen Ringraum 7 eines Kühlkreislaufes bildet, dessen Kühlflüssigkeit von einer separaten Pumpe 8 umgewälzt wird, deren Pumpenwelle über ein Kegelradgetriebe 10 von der Motorenwelle 2 angetrieben ist und im Folgenden "Kühlpumpe" 8 genannt wird. Die Kühlpumpe 8 fördert über ein senkrechtes Steigrohr 7a das Kühlmittel in den Ringraum 7, wobei der Ringraum eine Erweiterung aufweist, um das Steigrohr aufzunehmen. Die Welle 9 der Kühlpumpe 8 ist in einem Axial- und Radiallager 13 gelagert, liegt rechtwinklig zur Motorenwelle 2 und trägt an ihrem inneren Ende ein Kegelzahnrad 11, das mit einem Kegelzahnrad 12 auf der Motorenwelle 2 kämmt. Das Kegelradgetriebe 10 mit seinen Kegelzahnrädern 11 und 12 besitzt eine Übersetzung von 1 : 2 bis 1 : 3 (vorzugsweise 1 : 2,6) und sorgt dafür, dass die Drehzahl der Kühlpumpe 8 erheblich höher ist als die des Motors 1.

Die Kühlpumpe 8 saugt mit ihrem Pumpenlaufrad 14 über den Saugstutzen und über einen koaxialen, oberen Kanal 15 das Kühlmittel aus dem Ringraum 7 an und fördert es über den Druckstutzen und einen unteren Kanal 16, in Kühlkanäle 17 eines Kühlflansches 18, der die Seitenwand zum Pumpenraum bildet und die Wärme der Kühlflüssigkeit an das geförderte Medium abgibt.

Zwischen dem Motorengehäuse 6 und dem nicht dargestellten Pumpengehäuse sind zwei Gehäuseschichten 20, 21 angeordnet, die im wesentlichen denselben Umfang und Durchmesser besitzen und von denen die obere Schicht als ringförmige Gehäusezwischenschicht 20 die Kühlpumpe 8 trägt bzw. umgibt. Die untere Gehäuseschicht 21 verbindet die Gehäusezwischenschicht 20 über den Kühlflansch 18 mit dem Gehäuse der Pumpe bzw. des Pumpenraums und bildet eine Leckagekammer 22 und eine Ölkammer 23. Ferner sind in der unteren Gehäuseschicht 21 das Lager 24 und die Kassettendichtung 25 der Motorwelle 2 angeordnet, die beide Schichten 20, 21 durchdringt.

Die Gehäusezwischenschicht 20 bildet einen von außen zugänglichen Aufnahmeraum 26, der seitlich zur Umgebung des Elektromotors 1 hin offen ist (Öffnung 27), solange die Öffnung 27 nicht verschlossen ist. In den Raum 26 ist die Kühlpumpe 8 mit ihrem Gehäuse 28 von außen formschlüssig einschiebbar, wobei die Außenabmessungen des Kühlpumpengehäuses 28 den Innenabmessungen des Aufnahmeraums 26 entsprechen. Die elektrischen Anschlüsse der Kühlpumpe 8 insbesondere für Sensoren mit den elektrischen Anschlüssen im Aufnahmeraum 26 erfolgen über Steckverbindungen, die außen am Gehäuse 28 und innen im Aufnahmeraum 26 befestigt sind, so dass nach dem Einschieben der Kühlpumpe 8 die Verbindungen geschlossen sind.

In gleicher Weise werden durch das Einschieben der Kühlpumpe 8 in den Aufnahmeraum 26 die hydraulischen Verbindungen der Kanäle 15, 16 mit dem Pumpenstutzen hergestellt, die in den Innen- und Außenwänden miteinander fluchten. Nach dem Einsetzen der Kühlpumpe 8 wird der Aufnahmeraum 26 bzw. dessen Öffnung 27 durch einen Deckel 29 verschlossen, der von außen aufoder eingesetzt wird.

Im Ausführungsbeispiel ist bei abgenommenen Deckel 29 der Aufnahmeraum 26 zur Seite der Gehäusezwischenschicht 20 hin offen. Der Deckel 29 kann fehlen, wenn der Aufnahmeraum 26 und seine Öffnung 27 von dem Gehäuse 28 der Kühlpumpe 8 dichtend ausgefüllt sind. Hierbei können die Kühlpumpe und ihr Gehäuse seitlich über die Schicht 20 vorstehen. Im letzten Fall kann ein gewölbter Deckel das vorstehende Gehäuse 28 umfassen.

Die Pumpenkammer 30 der Kühlpumpe 8 bildet um das Laufrad 14 herum einen Spiralraum, oder einen wendel- oder helixförmigen Raum mit einer seitlichen Erweiterung 31 ähnlich einem Seitenkanal, wodurch die Außenabmessungen des Gehäuses 28 in radialer Richtung gering sind und damit das Pumpengehäuse 28 einen geringeren Durchmesser aufweist.

## Patentansprüche

1. Motorkreiselpumpe insbesondere als Tauchpumpe mit einer vom Elektromotor (1) angetriebenen Kühlmittelpumpe (8), die das Kühlmittel des Elektromotors umwälzt und deren Laufrad (14) vom Elektromotor angetrieben ist, **dadurch gekennzeichnet, dass** die Laufradwelle (9) der Kühlmittelpumpe (8) über ein Getriebe (10) an die Motorwelle (2) angeschlossen ist.

2. Motorkreiselpumpe nach Anspruch 1, **dadurch gekennzeichnet, dass** die Kühlmittelpumpe (8) eine Radialkreiselpumpe ist.

3. Motorkreiselpumpe nach Anspruch 1 oder 2, **dadurch gekennzeichnet, dass** das Getriebe (10) zwischen Motorwelle (2) und der Laufradwelle (9) der Kühlmittelpumpe (8) ein Kegelradgetriebe oder ein Riemengetriebe ist.

4. Motorkreiselpumpe nach einem der vorherigen Ansprüche, **dadurch gekennzeichnet, dass** zwischen dem Motorgehäuse (6) und dem Gehäuse der Kreiselpumpe oder einer weiteren Gehäusezwischenschicht (21) eine Gehäusezwischenschicht (20) angeordnet ist, in der die Kühlmittelpumpe (8) gelagert ist.

5. Motorkreiselpumpe nach Anspruch 4, **dadurch gekennzeichnet, dass** die Kühlmittelpumpe (8) in einem Raum (26) der Gehäusezwischenschicht (20) formschlüssig einliegt.

6. Motorkreiselpumpe nach Anspruch 5, **dadurch gekennzeichnet, dass** der Raum (26) nach außen durch einen Deckel (29) verschlossen ist.

7. Motorkreiselpumpe nach Anspruch 6, **dadurch gekennzeichnet, dass** der Deckel (29) mit seiner Innenseite einen seitlichen Bereich des Spiralraumes der Kühlmittelpumpe (8) bildet.

8. Motorkreiselpumpe nach einem der vorherigen Ansprüche, **dadurch gekennzeichnet, dass** der Pumpenspiralraum der Kühlmittelpumpe (8) einen Spiralkanal (31) aufweist, der seitlich des Laufrades (14) angeordnet ist.

9. Motorkreiselpumpe nach einem der Ansprüche 4 bis 8, **dadurch gekennzeichnet, dass** die Kühlmittelpumpe (8) von außen entnehmbar und einsetzbar ist.

10. Motorkreiselpumpe nach einem der Ansprüche 4 bis 9, **dadurch gekennzeichnet, dass** die Gehäusezwischenschicht (20) am Motorgehäuse (6) und am Pumpengehäuse oder an einer weiteren Gehäusezwischenschicht (21) lösbar befestigt ist.

11. Motorkreiselpumpe nach einem der vorherigen Ansprüche, **dadurch gekennzeichnet, dass** zum Erreichen einer höheren Drehzahl der Kühlmittelpumpe (8) als der Motorkreiselpumpe das Getriebe (10) zwischen der Motorwelle (2) und der Laufradwelle (9) der Kühlmittelpumpe (8) ein Übersetzungsverhältnis von 1 : 2 bis 1: 3 besitzt.

12. Motorkreiselpumpe nach einem der vorherigen Ansprüche, **dadurch gekennzeichnet, dass** die Laufradachse (9a) der Kühlmittelpumpe (8) im wesentlichen rechtwinklig zur Motorachse (2a) angeordnet ist

## Claims

1. Motor-driven rotary pump, in particular in the form of a submersible pump with a coolant pump (8) which is driven by the electric motor (1) and which circulates the coolant of the electric motor and whose impeller (14) is driven by the electric motor, **characterized in that** the impeller shaft (9) of the coolant pump (8) is connected to the motor shaft (2) by way of a mechanism (10).

2. Motor-driven rotary pump according to Claim 1, **characterized in that** the coolant pump (8) is a radial rotary pump.

3. Motor-driven rotary pump according to Claim 1 or 2, **characterized in that** the mechanism (10) between motor shaft (2) and the impeller shaft (9) of the coolant pump (8) is a bevel-gear mechanism or a belt mechanism.

4. Motor-driven rotary pump according to one of the preceding claims, **characterized in that**, between the motor housing (6) and the housing of the rotary pump or a further housing intermediate layer (21), there is arranged a housing intermediate layer (20) in which the coolant pump (8) is mounted.

5. Motor-driven rotary pump according to Claim 4, **characterized in that** the coolant pump (8) lies in positively locking fashion in a space (26) of the housing intermediate layer (20).

6. Motor-driven rotary pump according to Claim 5, **characterized in that** the space (26) is closed off to the outside by a cover (29).

7. Motor-driven rotary pump according to Claim 6, **characterized in that** the cover (29) forms, by way of its inner side, a lateral region of the spiral space of the coolant pump (8).

8. Motor-driven rotary pump according to one of the preceding claims, **characterized in that** the pump spiral space of the coolant pump (8) has a spiral duct (31) which is arranged laterally with respect to the impeller (14).

9. Motor-driven rotary pump according to one of Claims 4 to 8, **characterized in that** the coolant pump (8) is removable and insertable from the outside.

10. Motor-driven rotary pump according to one of Claims 4 to 9, **characterized in that** the housing intermediate layer (20) is detachably fastened to the motor housing (6) and to the pump housing or to a further housing intermediate layer (21).

11. Motor-driven rotary pump according to one of the preceding claims, **characterized in that**, in order to realize a rotational speed of the coolant pump (8) higher than that of the motor-driven rotary pump, the mechanism (10) between the motor shaft (2) and the impeller shaft (9) of the coolant pump (8) has a transmission ratio of 1:2 to 1:3.

12. Motor-driven rotary pump according to one of the preceding claims, **characterized in that** the impeller axis (9a) of the coolant pump (8) is arranged substantially at right angles to the motor axis (2a).

## Revendications

1. Pompe centrifuge à moteur, en particulier en tant que pompe submersible comprenant une pompe a réfrigérant (8) entraînée par le moteur électrique (1), qui fait circuler le réfrigérant du moteur électrique et dont le rotor (14) est entraîné par le moteur électrique, **caractérisée en ce que** l'arbre de rotor (9) de la pompe à réfrigérant (8) est raccordé à l'arbre de moteur (2) par le biais d'une transmission (10).

2. Pompe centrifuge à moteur selon la revendication 1, **caractérisée en ce que** la pompe à réfrigérant (8) est une pompe centrifuge radiale.

3. Pompe centrifuge à moteur selon la revendication 1 ou 2, **caractérisée en ce que** la transmission (10) entre l'arbre de moteur (2) et l'arbre de rotor (9) de la pompe à réfrigérant (8) est une transmission à pignons coniques ou une transmission à courroie.

4. Pompe centrifuge à moteur selon l'une quelconque des revendications précédentes, **caractérisée en ce qu'**entre le boîtier de moteur (6) et le boîtier de la pompe centrifuge ou une couche intermédiaire de boîtier supplémentaire (21) est disposée une couche intermédiaire de boîtier (20) dans laquelle est supportée la pompe à réfrigérant (8).

5. Pompe centrifuge à moteur selon la revendication 4, **caractérisée en ce que** la pompe à réfrigérant (8) s'insère par engagement par correspondance de formes dans un espace (26) de la couche intermédiaire de boîtier (20).

6. Pompe centrifuge à moteur selon la revendication 5, **caractérisée en ce que** l'espace (26) est fermé vers l'extérieur par un couvercle (29).

7. Pompe centrifuge à moteur selon la revendication 6, **caractérisée en ce que** le couvercle (29) forme avec son côté intérieur une région latérale de l'espace spiral de la pompe à réfrigérant (8).

8. Pompe centrifuge à moteur selon l'une quelconque des revendications précédentes, **caractérisée en ce que** l'espace spiral de pompe de la pompe à réfrigérant (8) présente un canal spiral (31) qui est disposé latéralement par rapport au rotor (14).

9. Pompe centrifuge à moteur selon l'une quelconque des revendications 4 à 8, **caractérisée en ce que** la pompe à réfrigérant (8) peut être enlevée et insérée de l'extérieur.

10. Pompe centrifuge à moteur selon l'une quelconque des revendications 4 à 9, **caractérisée en ce que** la couche intermédiaire de boîtier (20) est fixée de manière amovible au niveau du boîtier de moteur (6) et au niveau du boîtier de pompe ou au niveau d'une couche intermédiaire de boîtier supplémentaire (21).

11. Pompe centrifuge à moteur selon l'une quelconque des revendications précédentes, **caractérisée en ce que** pour obtenir une vitesse de rotation de la pompe à réfrigérant (8) plus élevée que celle de la pompe centrifuge à moteur, la transmission (10) entre l'arbre de moteur (2) et l'arbre de rotor (9) de la pompe à réfrigérant (8) possède un rapport de transmission de 1:2 à 1:3.

12. Pompe centrifuge à moteur selon l'une quelconque des revendications précédentes, **caractérisée en ce que** l'axe de rotor (9a) de la pompe à réfrigérant (8) est disposé essentiellement à angle droit par rapport à l'axe de moteur (2a).
